# FASCICULE DE BREVET EUROPEEN

(11) **EP 2 648 960 B1**
(45) Date de publication et mention de la délivrance du brevet: **28.02.2018**
(21) Numéro de dépôt: 11758456.5
(22) Date de dépôt: 15.09.2011
(51) Int. Cl.: B61L 11/08, B61L 13/04, B61L 23/26, B61L 15/00

(54) **MÉTHODE DE COMMUNICATION D' INFORMATION ENTRE UNE UNITÉ DE CONTRÔLE EMBARQUÉE ET UN RÉSEAU DE TRANSPORTS PUBLICS**
VERFAHREN ZUR INFORMATIONSÜBERTRAGUNG ZWISCHEN EINER BORDSEITIGEN STEUEREINHEIT UND EINEM ÖFFENTLICHEN VERKEHRSNETZ
METHOD FOR COMMUNICATING INFORMATION BETWEEN AN ON-BOARD CONTROL UNIT AND A PUBLIC TRANSPORT NETWORK

(30) Priorité: 09.12.2010 EP 10290643
(43) Date de publication de la demande: 16.10.2013
(73) Titulaire: Siemens S.A.S., 93527 Saint-Denis Cedex (FR)
(72) Inventeur: EL FASSI, Said, F-91270 Vigneux sur Seine (FR)
(74) Mandataire: Maier, Daniel Oliver
(86) Numéro de dépôt international: PCT/EP2011/066040
(87) Numéro de publication internationale: WO 2012/076206

(56) Documents cités:
- EP-A1- 1 147 966
- EP-A1- 1 695 890
- WO-A2-2011/084251
- ARMS J-C: "DEZENTRALE INTELLIGENZ FUER LEIT- UND SICHERUNGSTECHNIK - VORAUSSETZUNG FUER FUNK-BASIERTE BETRIEBSKONZEPTE", EISENBAHNINGENIEUR, TETZLAFF, HAMBURG, DE, vol. 48, 1 juin 1997 (1997-06-01), pages 12-16, XP009067244, ISSN: 0013-2810

## Description

La présente invention concerne principalement une méthode de communication d'au moins une information entre une première unité de contrôle embarquée dans un premier véhicule et un réseau de transports publics selon le préambule de la revendication 1.

A ce jour, les méthodes de communications entre des équipements embarqués dans un premier véhicule (de type transport public : train ou ses unités, métro, tram, trolley, bus, etc.) et un réseau physique de transport public (équipements au sol et embarqués dans d'autres véhicules) présentent des performances conséquentes qui permettent en particulier de générer des commandes rapides et sécuritaires comme sous la technique CBTC (Communication Based Train Control), bien adaptée aux véhicules autoguidés/autoguidables (par exemple sans chauffeur). A cet effet des unités de contrôle sont majoritairement disposées dans des infrastructures au sol afin de pouvoir émettre des informations sous forme de commandes aux véhicules ou à d'autres équipements au sol comme des aiguilles ou des feux de signalisation au sol.
Suivant cette logique, au stade de la conception initiale tout comme d'une actualisation/rénovation d'une infrastructure de transports publics, il est donc nécessaire de centraliser des informations de contrôle au sol dans au moins un poste de contrôle central (ou plusieurs centres de contrôle qui doivent de toute façon être en communication) mais il est aussi nécessaire de distribuer (ou redistribuer) les informations émises de ces unités de contrôle au sol sur l'intégralité du réseau de transport public pour atteindre les modules récepteur (le cas échéant émetteur) de chaque véhicule ou des équipements au sol. Ce type de chantier est complexe car fait intervenir des opérations multiples et coûteuses de travaux (installations de voirie pour raccordements câblés, mise en place de points radio « wireless » tels que des « access points » distribués le long des voies et formant un réseau sol, etc.). Le document EP 1 147 966 A1 décrit un système commandant des aiguillages à distance depuis un train.

Un but de la présente invention est de proposer une méthode de communication d'au moins une information entre une première unité de contrôle embarquée dans un premier véhicule et un réseau de transports publics (incluant équipements au sol et embarqués dans tout autre véhicule) dans le but de minimiser la complexité du dit réseau de transport public, tant sous son aspect d'infrastructure physique (voiries, câblages) que son aspect communication (équipements filaires, locaux techniques).
A partir d'une méthode de communication d'au moins une information entre une première unité de contrôle embarquée dans un premier véhicule et un réseau de transports publiques, l'invention prévoit que :
- l'information est émise par la première unité de contrôle sous forme d'une commande, ladite commande étant transférée à une première unité de communication embarquée dans le premier véhicule,
- la première unité de communication établit une liaison de transmission hors du véhicule avec une deuxième unité de communication reliée à un module d'exécution de ladite commande, la deuxième unité de communication et le module d'exécution étant soit disposés au sol, soit embarqués dans un deuxième véhicule comprenant une deuxième unité de contrôle,
- dans le cas d'une transmission vers la deuxième unité de communication au sol, le module d'exécution au sol est commandé sous un mode esclave directement régi pour ladite commande par un mode maitre de la première unité de contrôle. Puis, idéalement si non détectable autonomement par la première unité de contrôle, une confirmation de l'état d'exécution du module d'exécution au sol est transmise en retour à la première unité de contrôle, les dites transmissions aller et retour étant libres de transit via une infrastructure de communication au sol,
- dans le cas d'une transmission vers la deuxième unité de communication embarquée, le module d'exécution embarqué dans le deuxième véhicule est commandé sous un mode esclave directement régi pour y laisser exécuter ladite commande sous un mode maitre de la première unité de contrôle (CU1), plaçant ainsi au moins provisoirement une deuxième unité de contrôle embarquée dans le deuxième véhicule sous un mode esclave pour l'exécution de ladite commande. Puis, idéalement, une confirmation de l'état d'exécution du module d'exécution embarqué est transmise à la première unité de contrôle, les dites transmissions aller et retour étant libres de transit via une infrastructure de communication au sol. Il est aussi envisageable que l'exécution de ladite commande soit possible directement par contrôle du deuxième véhicule, en ce que le mode esclave de la deuxième unité de contrôle est finalement (re)basculé en mode maitre pour exécuter autonomement ladite commande. Alternativement (en particulier en cas de panne invalidante dans le premier véhicule ou son unité de contrôle) si cette confirmation implique un mode dégradé entre les unités de contrôle du premier et du deuxième véhicules, un module d'exécution (EXE1) embarqué dans le premier véhicule est commandé sous un mode re-basculé esclave directement régi par un mode maitre de la deuxième unité de contrôle, plaçant ainsi au moins provisoirement la première unité de contrôle (CU1) embarquée dans le premier véhicule sous un mode esclave pour y exécuter ladite commande. Une telle alternance des modes maitre/esclave des deux unités de contrôle se poursuit jusqu'à ce que la commande initiale soit échue dans des conditions au moins sécuritaires.

Plus particulièrement, le mode initialement maitre de la première unité de contrôle embarquée est permis grâce à une prédisposition dite « intelligente », en ce que le plus possibles d'informations et procédés de gestion d'un réseau de transport public ont été stockés dans ladite unité préalablement au fonctionnement dudit réseau (et par extension dans toutes les unités de contrôle embarquées dans tous les véhicules). Dans d'autres termes et contrairement à l'état de la technique où de telles informations et procédés associés de contrôle à caractère « intelligent » sont majoritairement localisés dans des équipements « maitres » de gestion du réseau/trafic au sol les retransmettant vers les équipements embarqués et au sol, la méthode selon la présente invention délocalisent la fonction « maitre » vers les unités de contrôle embarquées permettant ainsi à ces dites unités de régir directement sous un mode maitre d'autres équipements au sol ou embarqués en étant libre de devoir requérir un transit d'information via les équipements du réseau de gestion au sol. La conséquence avantageuse d'une telle utilisation de la méthode selon l'invention est principalement que lors d'une installation ou d'une actualisation (extension ou remplacement d'un réseau ferroviaire), toutes les opérations complexes d'aménagement d'installation de contrôle au sol pour la gestion du trafic sont évitables ou du moins fortement simplifiées. Les coûts de construction engendrés sont donc fort réduits et l'environnement est préservé car ne doit pas être modifié pour implanter des équipements de contrôle ou déployer un réseau de communication le long des voiries.

Un ensemble de sous-revendications présente également des avantages de la méthode selon l'invention, ainsi que des avantages d'utilisation de ladite méthode.

En particulier, la méthode selon l'invention prévoit que dans le cas d'une transmission vers la deuxième unité de communication au sol, la commande émanant directement de la première unité de contrôle embarquée régit au moins une des actions avantageuses suivantes :
- une ouverture de portes palières de quai, idéalement de façon synchrone à des portes palières du véhicule ; de cette façon, tout risque de désynchronisation entre des modules de contrôles de deux automates (embarqué et à quai) pour l'ouverture/fermeture des deux systèmes de portes palières est évité.
- un enclenchement et un mouvement d'aiguilles est directement possible sous intervention d'un ou plusieurs modes maitres de véhicules avoisinés, sans devoir obtenir une commande d'autorisation d'équipements de gestion de trafic au sol, ou d'enclenchement gérés au sol;
- une signalisation lumineuse ou mécanique au sol est aussi commandable sous régime maitre d'une unité de contrôle embarquée sachant que l'unité de contrôle dispose de l'information « intelligente » préalablement stockées sécuritairement; même dans le cas d'une pluralité de véhicules, chacune de leur unités de contrôle sont capables de s'auto-régir en établissant une hiérarchie 1^{er} maitre, 2^{e} maitre comme sous-maitre et esclave par exemple pour trois véhicules au voisinage de ladite signalisation. Suivant ce schéma, il est aussi possible de décaler cycliquement cette hiérarchie entre les trois véhicules pour estimer qu'elle est la plus adaptée (sécuritairement la plus économique ou rapide quant à la gestion requise du trafic) afin de commander optimalement la signalisation ;
- un stockage d'information instantanée dans une borne de communication au sol transmise par le premier véhicule, la dite information étant idéalement lisible par tout véhicule qui l'approche; ainsi, des échanges de données de trafic entre véhicules distants est rendu possible plus facilement sans intermédiaire de points de réseaux sol complexe ;
- une émission de diagnostic pour solliciter un service au sol telle qu'un apport énergétique, une étape de maintenance, une urgence ; cette émission peut avoir lieu au niveau d'une borne de communication centralisant ledit diagnostic, par exemple au niveau d'une station comprenant une unité de stockage d'énergie qui, directement sollicitée sous le mode maitre du véhicule, charge le véhicule selon ses besoins autonomie et ceux requis pour le reste du réseau de transport public;
- une émission de signal d'alerte ; cette alerte peut ainsi être communiquée en imposant aux autres unités de contrôle au sol et embarquées (mobiles) des modes « esclave » préventifs pour contourner voire résorber l'alerte selon des schémas sécuritaires de contrôle des véhicules;
- un communiqué d'état fonctionnel d'équipements embarqués et/ou au sol; etc.

Egalement, la méthode selon l'invention prévoit que, dans le cas d'une transmission vers la deuxième unité de communication embarquée, la commande émanant directement de la première unité de contrôle régit au moins une des actions suivantes :
- un échange d'information de type CBTC (communication based train control), ATC (automatic train control), IXL (interlocking), ATP (automatic train protection), ATO (automatic train operation) en particulier adaptée pour les véhicules autoguidés ;
- un échange d'une information permettant à un pilote embarqué dans le premier véhicule ou un conducteur une conduite automatique ou manuelle du deuxième véhicule ;
- une autorité de mouvement autonome du premier et du deuxième véhicule ;
- une consigne préventive d'anticollision par exemple basculement des modes maitre/esclave de deux unités de contrôle en communication directe, ou du moins d'une unité de contrôle généralement pilotée par un dispositif anticollision (senseur de distance, camera « safe eye », etc.) ;
- une consigne d'accostage et d'arrimage de véhicules selon le même principe que la consigne anticollision;
- une consigne de scindage d'un véhicule composé d'une pluralité d'unités roulantes sur le principe inverse d'une consigne d'accostage/arrimage ;
- une émission inter-véhicule d'informations de chaque véhicule selon plusieurs paramètres tels que position, vitesse, niveaux énergétiques, capacité de freinage, trajets instantanés et prévus ; ces informations permettant en particulier à chaque unité de contrôle embarquée de prioriser des modes maitre ou esclave suivant les objectifs et besoins de chaque véhicule ;
- un basculement forcé de protection de mode maitre à mode esclave d'une des unités de contrôle ou toute autre anomalie détectée hors de normes sécuritaires , une autre des unités de contrôle embarquée pouvant alors se figer sous un mode maitre afin de suppléer ou compenser l'anomalie par exemple en télécommandant des équipements embarqués dans le véhicule comprenant l'unité de contrôle en mode esclave;
- un basculement forcé de protection de mode maitre à mode esclave d'une des unités de contrôle ou toute autre anomalie détectée hors de normes sécuritaires, et télécommande des équipements embarqués dans le véhicule comprenant l'unité de contrôle en mode esclave depuis un pilote de réseau sol ;

La méthode selon l'invention prévoit aussi qu'au moins un des véhicules autorise un basculement d'une unité de contrôle au sol sous un mode maitre afin de transmettre à une unité de contrôle embarquée des paramètres liés au réseau, ressources, planning et équipements de transports publiques. Cette procédure permet d'actualiser et compléter de façon centrale et simple les données à caractère « intelligent » depuis une unique interface sol vers des véhicules voire vers d'autres équipements au sol par l'intermédiaire de véhicules devant les approcher et leur transmettre/imposer ces données sous un mode esclave de l'équipement au sol imposé par un mode maitre de l'unité de contrôle du véhicule. Ainsi, l'information est ici avantageusement transmise mobilement au moyen de l'unité de contrôle embarquée sans recours à un réseau de communication complexe/onéreux au sol.

La méthode selon l'invention est particulièrement bien adaptée pour une utilisation de liaisons de type radio appliquées à des communications d'information entre des équipements du premier véhicule et des équipements sol ou embarqués hors du premier véhicule. Par ce biais, les liaisons câblées, filaires ou par contact sont inexistantes, même pour une liaison entre des équipements d'une station (par exemple portes palières) et ceux des véhicules.

Enfin, une utilisation de la méthode selon l'invention a particulièrement un intérêt majeur lors d'une implantation, d'une actualisation ou d'une mise en service d'un réseau physique de transports publiques et d'un réseau de communication associé, en particulier en maximisant, dans une première phase, un apport initial de données stockables dans les unités de contrôle embarquées par des véhicules afin, dans une seconde phase, de minimiser voire éliminer le nombre de moyens de transmission de données, informations et commandes depuis des infrastructures de communication au sol vers les dits véhicules, les dites données ainsi stockées et embarquées étant utilisées pour générer les informations sous forme de commande. En d'autres termes, un réseau de transport public ne nécessite plus deux niveaux de réseau de communication au sol et embarqué le long des voiries, mais uniquement un réseau pour permettre la communication inter-véhicules ainsi que vers des équipements au sol. En d'autres termes et selon un mode préféré de l'invention, l'utilisation de la méthode selon l'invention peut s'effectuer en étant, au moins sous un régime sécuritaire constaté depuis des équipements embarqués, exempte de transmission de données, informations et commandes depuis des infrastructures de communication au sol vers les dits équipements embarqués.

Enfin, l'utilisation de la méthode selon l'invention prévoit que des données utilisées pour générer les informations sous forme de commande visée, de façon identique et complémentaire aux données stockées et embarquées, soient fournies par des équipements sensoriels embarqués, tels qu'un senseur optique, une caméra, un capteur de mesure de distance, un lecteur RFID et tout autre détecteur. Par ce biais, un ou plusieurs véhicules sont rendus de plus en plus autonome et des basculements entre modes maitre/esclave sont gérés sous des priorités sécuritaires accrus, tout en ayant réduit la complexité de la communication des informations au réseau « intelligent) et embarqué.

Des exemples de réalisation et d'application sont fournis à l'aide de figures décrites :
- Figure 1: Commande d'une aiguille, d'un feu de signalisation, d'une borne suivant la méthode selon l'invention,
- Figure 2: Commande d'une aiguille et d'un feu à l'approche de deux véhicules suivant la méthode selon l'invention,
- Figure 3: Commande de portes palières de véhicule et de quai en station suivant la méthode selon l'invention,
- Figure 4: Commande anti-collision entre deux véhicules suivant la méthode selon l'invention,

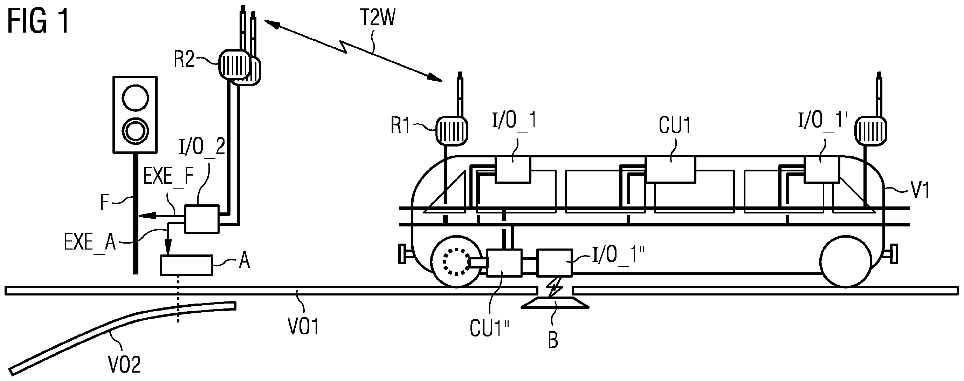

La **figure 1** présente une mise en oeuvre typique de commande d'un feu F et d'une aiguille A à enclencher pour qu'un véhicule V1 (unité de train) puisse passer le feu et changer de sa voie initiale VO1 à une deuxième voie VO2 après enclenchement et mouvement de l'aiguille dans la position requise. Le véhicule comprend des équipements embarqués englobant au moins une unité de contrôle CU1 pouvant émettre une information sous forme de commande T2W, ladite commande étant transférée depuis l'unité de contrôle via une première unité de communication I/O_1 embarquée, ici de type radio R1, à une deuxième unité de communication I/O_2, ici également de type radio R2, reliée respectivement à un module d'exécution EXE_F, EXE_F exécutant la commande reçue pour commander le feu et l'aiguille. La méthode selon l'invention prévoit ici que la liaison de commande entre les équipements embarqués et les deux modules d'exécution au sol est libre de toute liaison de communication avec d'autres équipements de communication au sol, car les modules d'exécution au sol sont directement commandés sous un mode esclave régi par un mode maitre de la première unité de contrôle (CU1). En effet, le mode maitre de la première unité de contrôle (CU1) obéit lui-même autonomement à un protocole de gestion de trafic sécuritaire tel que ceux imposés dans le passé par un poste de contrôle central au sol, gérés par des routines et des opérateurs de transport public.
Dans l'exemple de la figure 1, un autre module d'exécution d'une borne ferroviaire B peut aussi être autonomement géré par une seconde unité de contrôle CU1" et son unité de communication I/O_1", toutes deux étant embarqués. L'unité de contrôle dispose en effet depuis une connaissance directe de sa vitesse (à l'aide d'un tachymètre, d'une mesure odométrique ou d'un autre moyen de mesure) et peut ainsi délivrer à la borne des informations intrinsèques du véhicule telles que vitesse, identification de véhicule, diagnostic, état d'énergie, plan de circulation, etc. afin de les redistribuer à un prochain véhicule qui croisera la borne B. Ceci suppose que la liaison entre l'unité de communication I/O_1" et la borne B est bilatérale et que la borne soit mise sous deux modes esclaves de type enregistreur d'informations émises par l'unité de contrôle et de type émetteur pour une lecture des informations stockées. Par ce biais, plusieurs trains peuvent, en redondance avec leur plan individuel de trafic par défaut, se recalibrer autonomement sur des variations de gestion du trafic global. Ici encore, une telle gestion ponctuelle par bornes fixes au sol est ainsi libre de toute communication sous forme d'un réseau sol de communication s'étendant le long des voiries et contrôlé de façon centrale par un poste de commande.
Suivant ces diverses configurations, d'autres unités ou routines de contrôles, d'autres unités possibles de communication adaptées peuvent ainsi être embarquées à bord des véhicules, permettant ainsi selon la dite méthode selon l'invention d'être simplement évolutive en fonctions des attentes et progrès des équipements autonomes de gestion de trafic.

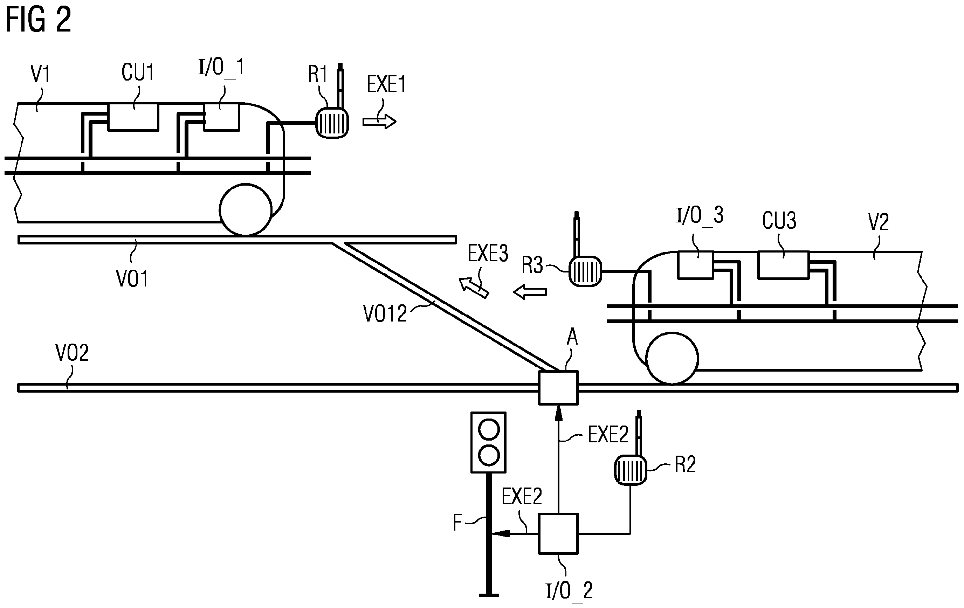

La **figure 2** présente un cas de figure d'une commande d'une aiguille A et d'un feu F à l'approche de deux véhicules V1, V2 pour lequel la méthode selon l'invention peut être appliquée aisément et fort avantageusement. Principalement, le premier véhicule V1, l'aiguille A et le feu F présente les mêmes caractéristiques que celles de la figure 1. Le deuxième véhicule V2 comprend aussi, sur l'exemple du premier véhicule V1, des équipements embarqués tels qu'une unité de contrôle CU3 reliée à une unité de communication I/O_3, ainsi qu'une unité d'exécution EXE3 (symbolisée par une flèche indiquant la marche et direction dudit véhicule).

Ainsi, pour illustrer cet exemple, on suppose que le premier véhicule V1 roule vers la droite sur sa première voie VO1 et le deuxième véhicule V2 arrive de la gauche sur sa voie VO2 distincte de la première voie VO1 et comprenant le feu et l'aiguille. Le véhicule V2 souhaite alors passer de sa deuxième voie VO2 vers la première voie VO1 par l'intermédiaire d'une portion de voie VO12 franchissable sous réserve de la bonne commande EXE2 du feu F et de l'aiguille A.
A priori, selon ce schéma une mise en oeuvre de la méthode selon l'invention peut être idéalement envisagé afin d'éviter toute collision entre les deux véhicules et, en particulier en minimisant des temps de réactions aux commandes du feu, de l'aiguille et du croisement des trains.

Le premier véhicule V1 est supposé de type prioritaire sur le deuxième véhicule V2, car, dans une zone d'approche de croisement suffisamment sécurisée, ce deuxième véhicule doit quitter sa voie pour aller sur une autre. Egalement, le feu est de type prioritaire sur l'aiguille.

En d'autres termes, le premier véhicule V1 lors de son passage dans la zone de croisement bascule en mode maitre afin de commander le feu F ainsi en mode esclave (arrêt de circulation imposé). Le deuxième véhicule V2 arrive vers le feu et doit donc le respecter tant que le premier véhicule V1 de type prioritaire impose son mode maitre au feu F, même si le deuxième véhicule a déjà imposé son mode maitre sur l'aiguille A ainsi en mode esclave. Une fois le premier véhicule V1 ayant passé l'embranchement de sa voie VO1 avec la voie intermédiaire de croisement VO12, il inhibe alors son mode maitre sur le feu F qui bascule en autorisation de franchissement dudit feu. Le deuxième véhicule V2 peut ainsi passer sur la voie intermédiaire de croisement VO12. Eventuellement une troisième mise en oeuvre de la méthode selon l'invention peut aussi intervenir en ce que le premier véhicule V1 bascule sous un mode maitre en connexion avec un mode esclave du deuxième véhicule, afin de lui interdire tout ordre de marche EXE3 tant que le premier véhicule V1 n'a pas dépassé entièrement l'embranchement de sa voie VO1 avec la voie intermédiaire VO12. Cette dernière application de la méthode selon l'invention est bien entendu redondante, mais peut ainsi en cas de panne du feu, sécuriser le croisement des véhicules de toute collision.
Toutes ces étapes décrites obéissant à deux ou trois applications groupées de la méthode selon l'invention se sont donc déroulées sans intervention d'une commande ou d'une autorisation d'un poste central de commande au sol ou d'équipements de gestion localisés dans des locaux techniques. Seuls les équipements locaux embarqués et au sol ont régi un croisement de trains avec un changement de voie sécurisé.

Un autre cas de figure peut être si le premier véhicule se trouve arrêté avant puis passe l'embranchement de sa voie VO1 et la voie intermédiaire VO12 et il s'avère que son unité de contrôle ou au moins sa commande en mode maitre sur le feu F en mode esclave présente une anomalie et bloque en permanence le feu en position d'interdiction de franchissement pour le deuxième véhicule, ce qui bloque par priorité du feu sur l'aiguille aussi sécuritairement l'aiguille A dans une position fermée (le deuxième véhicule V2 étant forcé de rester sur sa voie VO2). Le deuxième véhicule V2 détectant à distance la présence et une anomalie diagnosticable du premier véhicule V1 qui lui est provisoirement prioritaire et donc maitre au sens d'une commande de marche EXE3, met alors en oeuvre une transmission de retour d'information de commande de marche depuis son unité de contrôle CU3 vers le premier véhicule V1 et oblige ce dernier à basculer de son mode maitre à un mode esclave en forçant son module d'exécution EXE1 à circuler sur la première voie VO1 au moins pour s'assurer qu'il devrait avoir dépassé l'embranchement et donc libérer le passage du deuxième véhicule V2 sur la première voie V1. En outre, le deuxième véhicule ayant repris le mode maitre initialement accordé au premier véhicule envoie aussi une commande de changement d'état du feu F bloqué pour s'autoriser son franchissement et enfin débloquer l'aiguille. Le deuxième véhicule est donc provisoirement devenu maitre au sens de plusieurs modes de commandes vis-à-vis des équipements embarqués dans le premier véhicule V1 et au sol A, F.
Ici encore, une situation de croisement handicapée par une anomalie d'un véhicule se laisse gouverner sans besoin de moyens de communication au sol supplémentaires à ceux des équipements embarqués et de signalisation/guidage des véhicules au sol.

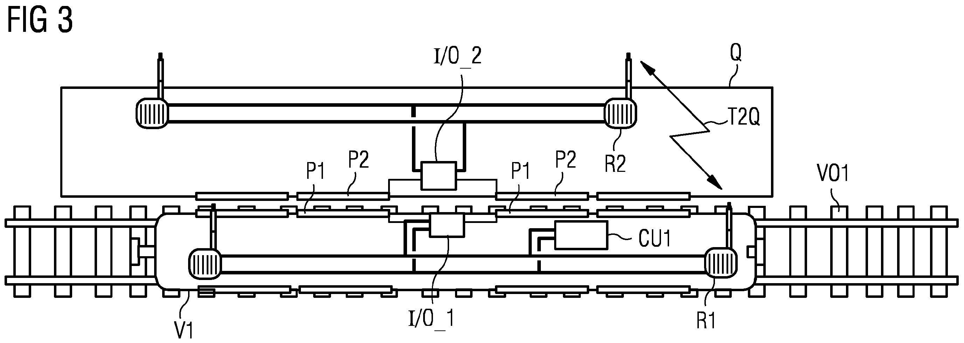

La **figure 3** présente une application avantageuse de mise en oeuvre de la méthode selon l'invention dans le cas de la commande par un véhicule V1 arrivant à un quai Q de station, le véhicule et le quai comprenant respectivement un jeu de portes palières qui les mécanismes d'ouverture et fermeture doivent respecter un schéma spatial et temporel précis et sécurisé pour les passagers. Dans cet exemple, c'est l'unité de contrôle CU1 du véhicule V1 à quai qui par transmission d'information de commande T2Q va imposer son mode maitre sur tout module d'exécution en mode esclave tel que l'automate d'ouverture de chacun des deux jeux de porte palières (embarquées et à quai). De cette façon, une désynchronisation temporelle d'ouverture/fermeture et une erreur d'alignement des bords ouvrants des jeux de portes palières sont avantageusement évitées. Ainsi, l'automate d'exécution d'ouverture du jeu de portes palières à quai P2 peut être asservi à celui du jeu de portes palières embarquées P1. De même, le signal initiant l'ouverture des deux jeux de portes palières peut être aussi délivré par l'unique unité de contrôle embarquée CU1, après que celle-ci ai reçu (d'un module d'exécution d'accostage fin au quai, également commandé sous un mode esclave) un signal de positionnement relatif toléré du véhicule par rapport au quai. En d'autres termes, aucune source de commande à caractère « intelligent » n'est disposée sur le quai, mais a été intégrée dans les équipements embarqués.

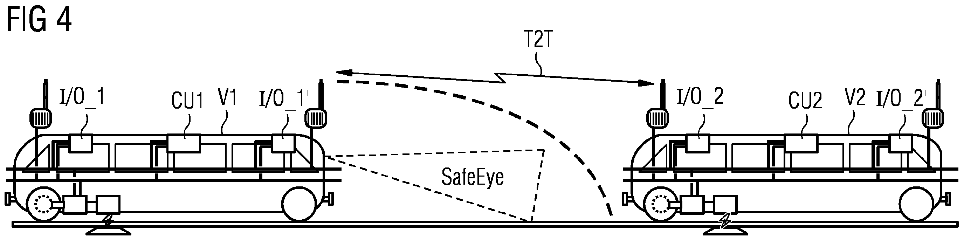

La **figure 4** présente une application avantageuse de commande anticollision entre deux véhicules V1, V2 sur une même voie suivant la méthode selon l'invention. La même idée peut être déduite pour un accostage, un arrimage ou un scindage d'unités de véhicule (train). Ici encore, l'unité de contrôle CU1 du premier véhicule V1 transmet en mode maitre une information de commande radio T2T directement à un module d'exécution de marche du deuxième véhicule V2 en mode esclave pour inhiber ou amorcer un ordre de marche de rapprochement du premier véhicule dans le cas d'un arrimage, après avoir reçu d'une autre unité d'exécution « SafeEye » (telle qu'un capteur de distance inter-véhicule) en mode esclave de commande et embarquée dans le premier véhicule V1 une autorisation d'approche ou d'arrêt. Alternativement ou complémentairement, les modes maitre/esclave peuvent être périodiquement inversés de façon à assurer un déroulement doublement sécurisé d'une procédure d'arrimage par exemple. Ainsi, une contrôle anticollision entre véhicules ou train peut être assurée en permanence de façon autonome et simple, sans besoin d'un contrôle externe au sol par un poste central en liaison avec tout le réseau physique de transport public.

Enfin, une mise en oeuvre préférée de la méthode selon l'invention prévoit que les unités de communication des divers équipements embarqués et sol sont pourvus de modules radio sous des modes de transmission de signaux libres d'interférences et idéalement permettant une identification instantanée de deux équipements dans un périmètre défini. De cette façon, la communication d'informations entre divers équipements peut être plus sélective, rapide et en permanence réactualisée en fonction d'une liste de couples d'équipements associables sous des modes maitre/esclave et classés sous des priorités variables de schéma autonome sécuritaire de trafic.

## Revendications

1. Méthode de communication d'au moins une information entre une première unité de contrôle (CU1) embarquée dans un premier véhicule (V1) et un réseau de transports publiques, dans laquelle
- l'information est émise par la première unité de contrôle (CU1) sous forme d'une commande (T2W, T2Q, T2T), ladite commande étant transférée à une première unité de communication (I/O_1) embarquée dans le premier véhicule,
- la première unité de communication (I/O_1) établit une liaison de transmission hors du véhicule avec une deuxième unité de communication (I/O_2, I/O_3) reliée à un module d'exécution (EXE2, EXE3) de ladite commande, la deuxième unité de communication et le module d'exécution étant soit disposés au sol, soit embarqués dans un deuxième véhicule (V2) comprenant une deuxième unité de contrôle (CU3),
- dans le cas d'une transmission vers la deuxième unité de communication (I/O_2) au sol, le module d'exécution au sol (EXE2) est commandé sous un mode esclave régi pour ladite commande par un mode maitre de la première unité de contrôle (CU1), **caractérisée en ce que**
- dans le cas d'une transmission vers la deuxième unité de communication (I/O_3) embarquée, le module d'exécution (EXE3) embarqué dans le deuxième véhicule est commandé sous un mode esclave régi pour laisser exécuter ladite commande sous un mode maitre de la première unité de contrôle (CU1), plaçant ainsi au moins provisoirement une deuxième unité de contrôle (CU2) embarquée dans le deuxième véhicule sous un mode esclave pour exécuter ladite commande.

2. Méthode selon revendication 1, pour laquelle le mode esclave de la deuxième unité de contrôle (CU2) est finalement basculé en mode maitre pour exécuter autonomement ladite commande.

3. Méthode selon revendication 1, pour laquelle alternativement, un module d'exécution (EXE1) embarqué dans le premier véhicule est commandé sous un mode rebasculé en mode esclave régi pour ladite commande par un mode maitre de la deuxième unité de contrôle (CU3) plaçant ainsi au moins provisoirement la première unité de contrôle (CU1) embarquée dans le premier véhicule sous un mode esclave pour exécuter ladite commande.

4. Méthode selon une des revendications 1 à 3, pour laquelle dans le cas d'une transmission vers la deuxième unité de communication (I/O_2) au sol, la commande régit au moins une des actions suivantes :
- une ouverture de portes palières de quai, idéalement de façon synchrone à des portes palières du véhicule ;
- un enclenchement d'aiguilles ;
- un mouvement d'aiguilles ;
- une signalisation au sol ;
- un stockage d'information instantanée transmise par le premier véhicule dans une borne de communication au sol, la dite information étant idéalement lisible par tout véhicule qui l'approche;
- une émission de diagnostic pour solliciter un service au sol telle qu'un apport énergétique, une étape de maintenance, une urgence ;
- une émission de signal d'alerte ;
- un communiqué d'état fonctionnel d'équipements embarqués et/ou au sol;

5. Méthode selon une des revendications 1 à 4, pour laquelle dans le cas d'une transmission vers la deuxième unité de communication (I/O_3) embarquée, la commande régit au moins une des actions suivantes :
- un échange d'information de type CBTC , ATC, IXL, ATP, ATO en particulier adaptée pour les véhicules autoguidés;
- un échange d'une information permettant à un conducteur une conduite manuelle du deuxième véhicule ;
- une autorité de mouvement autonome du premier et du deuxième véhicule ;
- une consigne préventive d'anticollision ;
- une consigne d'accostage et d'arrimage de véhicules ;
- une consigne de scindage d'un véhicule composé d'une pluralité d'unités roulantes ;
- une émission inter-véhicule d'informations de chaque véhicule selon plusieurs paramètres tels que position, vitesse, niveaux énergétiques, capacité de freinage, trajets instantanés et prévus ;
- un basculement forcé de protection de mode maitre à mode esclave d'une des unités de contrôle détectée hors de normes sécuritaires , l'autre des unités de contrôle embarquée se figeant sous un mode maitre afin de télécommander des équipements embarqués dans le véhicule comprenant l'unité de contrôle en mode esclave;
- un basculement forcé de protection de mode maitre à mode esclave d'une des unités de contrôle détectée hors de normes sécuritaires, et télécommande des équipements embarqués dans le véhicule comprenant l'unité de contrôle en mode esclave depuis un pilote de réseau sol ;

6. Méthode selon une des revendications précédentes, pour laquelle au moins un des véhicules autorise un basculement d'une unité de contrôle au sol sous un mode maitre afin de transmettre à une unité de contrôle embarquée des paramètres liés au réseau, ressources, planning et équipements de transports publiques.

7. Méthode selon une des revendications précédentes, pour laquelle des liaisons de type radio sont utilisées pour des communications d'information entre des équipements du premier véhicule et des équipements sol ou embarqués hors du premier véhicule.

8. Utilisation de la méthode selon une des revendications précédentes lors d'une implantation, d'une actualisation ou d'une mise en service d'un réseau physique de transports publiques et d'un réseau de communication associé, en particulier en maximisant, dans une première phase, un apport initial de données stockables dans des modules de contrôle embarqués par des véhicules afin, dans une seconde phase, de minimiser le nombre de moyens de transmission de données, informations et commandes depuis des infrastructures de communication au sol vers les dits véhicules, les dites données ainsi stockées et embarquées étant utilisées pour générer les informations sous forme de commande.

9. Utilisation selon la revendication 8 étant, au moins sous un régime sécuritaire constaté depuis des équipements embarqués, exempte de transmission de données, informations et commandes depuis des infrastructures de communication au sol vers les dits équipements embarqués.

10. Utilisation selon une des revendications 8 à 9, pour laquelle des données utilisées pour générer les informations sous forme de commande, de façon identique et complémentaire aux données stockées et embarquées, sont fournies par des équipements sensoriels embarqués, tels qu'un senseur optique, une caméra, un capteur de mesure de distance, un lecteur RFID et tout autre détecteur.

## Patentansprüche

1. Verfahren zur Übertragung wenigstens einer Information zwischen einer ersten Steuereinheit (CU1) an Bord eines ersten Fahrzeugs (V1) und einem öffentlichen Verkehrsnetz, wobei
- die Information von der ersten Steuereinheit (CU1) in Form eines Befehls (T2W, T2Q, T2T) gesendet wird, wobei dieser Befehl zu einer ersten Kommunikationseinheit (I/O_1) an Bord des ersten Fahrzeugs übertragen wird,
- die erste Kommunikationseinheit (I/O_1) eine Übertragungsverbindung aus dem Fahrzeug hinaus mit einer zweiten Kommunikationseinheit (I/O_2, I/O_3) herstellt, die mit einem Ausführungsmodul (EXE2, EXE3) zur Ausführung des Befehls verbunden ist, wobei die zweite Kommunikationseinheit und das Ausführungsmodul entweder am Boden angeordnet sind oder sich an Bord eines zweiten Fahrzeugs (V2) befinden, das eine zweite Steuereinheit (CU3) umfasst,
- im Falle einer Übertragung zu der zweiten Kommunikationseinheit (I/O_2) am Boden das Ausführungsmodul am Boden (EXE2) in einem Slave-Modus gesteuert wird, der für den besagten Befehl von einem Master-Modus der ersten Steuereinheit (CU1) bestimmt wird, **dadurch gekennzeichnet, dass**
- im Falle einer Übertragung zu der an Bord befindlichen zweiten Kommunikationseinheit (I/O_3) das Ausführungsmodul (EXE3) an Bord des zweiten Fahrzeugs in einem Slave-Modus gesteuert wird, der so bestimmt wird, dass der besagte Befehl in einem Master-Modus der ersten Steuereinheit (CU1) ausführen gelassen wird, wobei auf diese Weise eine zweite Steuereinheit (CU2) an Bord des zweiten Fahrzeugs wenigstens vorübergehend in einen Slave-Modus versetzt wird, um den Befehl auszuführen.

2. Verfahren nach Anspruch 1, wobei der Slave-Modus der zweiten Steuereinheit (CU2) schließlich in einen Master-Modus umgeschaltet wird, um den Befehl autonom auszuführen.

3. Verfahren nach Anspruch 1, wobei alternativ ein Ausführungsmodul (EXE1) an Bord des ersten Fahrzeugs in einem Modus gesteuert wird, der in einen Slave-Modus zurückgeschaltet ist, der für den besagten Befehl von einem Master-Modus der zweiten Steuereinheit (CU3) bestimmt wird, wobei auf diese Weise die erste Steuereinheit (CU1) an Bord des ersten Fahrzeugs wenigstens vorübergehend in einen Slave-Modus versetzt wird, um den Befehl auszuführen.

4. Verfahren nach einem der Ansprüche 1 bis 3, wobei im Falle einer Übertragung zu der zweiten Kommunikationseinheit (I/O_2) am Boden der Befehl wenigstens eine der folgenden Aktionen steuert:
- ein Öffnen von Bahnsteigtüren, im Idealfall synchron mit Einstiegstüren des Fahrzeugs;
- ein Einschalten von Weichen;
- eine Bewegung von Weichen;
- eine streckenseitige Signalisierung;
- eine Speicherung einer unmittelbaren Information, die durch das erste Fahrzeug übertragen wird, in einer streckenseitigen Kommunikationseinrichtung, wobei diese Information im Idealfall für jedes Fahrzeug, das sich nähert, lesbar ist;
- ein Senden von Diagnoseinformationen zum Anfordern eines streckenseitigen Dienstes, wie etwa einer Zufuhr von Energie, eines Wartungsschrittes, einer Notmaßnahme;
- ein Senden eines Alarmsignals;
- eine Mitteilung über den Betriebszustand von Einrichtungen an Bord und/oder am Boden.

5. Verfahren nach einem der Ansprüche 1 bis 4, wobei im Falle einer Übertragung zu der zweiten Kommunikationseinheit (I/O_3) an Bord der Befehl wenigstens eine der folgenden Aktionen steuert:
- einen Austausch von Informationen vom Typ CBTC, ATC, IXL, ATP, ATO, die insbesondere für führerlose Fahrzeuge angepasst sind;
- einen Austausch einer Information, die einem Fahrzeugführer ein manuelles Führen des zweiten Fahrzeugs ermöglicht;
- eine Fahrterlaubnis für eine autonome Fahrt des ersten und des zweiten Fahrzeugs;
- eine präventive Anweisung zum Kollisionsschutz;
- eine Anweisung zum Andocken und Kuppeln von Fahrzeugen;
- eine Anweisung zum Trennen eines Fahrzeugs, das aus mehreren rollenden Einheiten besteht;
- ein zwischen Fahrzeugen erfolgendes Senden von Informationen jedes Fahrzeugs gemäß mehreren Parametern, wie Position, Geschwindigkeit, Energieniveaus, Bremsvermögen, momentane und vorgesehene Fahrstrecken;
- eine erzwungene Schutzumschaltung einer der Steuereinheiten, die als nicht den Sicherheitsnormen genügend erkannt wurde, aus dem Master-Modus in den Slave-Modus, wobei die andere der Steuereinheiten an Bord in einem Master-Modus verharrt, um Einrichtungen an Bord des Fahrzeugs, das die Steuereinheit im Slave-Modus umfasst, fernzusteuern;
- eine erzwungene Schutzumschaltung einer der Steuereinheiten, die als nicht den Sicherheitsnormen genügend erkannt wurde, aus dem Master-Modus in den Slave-Modus, und Fernsteuerung der Einrichtungen an Bord des Fahrzeugs, das die Steuereinheit im Slave-Modus umfasst, von einer Steuereinrichtung des Netzes am Boden aus.

6. Verfahren nach einem der vorhergehenden Ansprüche, wobei wenigstens eines der Fahrzeuge ein Umschalten einer Steuereinheit am Boden in einen Master-Modus gestattet, um zu einer Steuereinheit an Bord Parameter zu übertragen, die mit dem Netz, Ressourcen, Planung und Einrichtungen des öffentlichen Verkehrs zusammenhängen.

7. Verfahren nach einem der vorhergehenden Ansprüche, wobei Verbindungen vom Typ von Funkverbindungen für Übertragungen von Informationen zwischen Einrichtungen des ersten Fahrzeugs und Einrichtungen am Boden oder an Bord eines Fahrzeugs außerhalb des ersten Fahrzeugs verwendet werden.

8. Anwendung des Verfahrens nach einem der vorhergehenden Ansprüche bei einer Einrichtung, einer Aktualisierung oder einer Inbetriebnahme eines physischen öffentlichen Verkehrsnetzes und eines zugehörigen Kommunikationsnetzes, insbesondere indem in einer ersten Phase eine anfängliche Einbringung von Daten, die in Steuermodulen an Bord von Fahrzeugen speicherbar sind, maximiert wird, um in einer zweiten Phase die Anzahl der Mittel zur Übertragung von Daten, Informationen und Befehlen von Kommunikationsinfrastruktureinrichtungen am Boden aus zu den Fahrzeugen zu minimieren, wobei die so gespeicherten und an Bord vorhandenen Daten verwendet werden, um die Informationen in Form von Befehlen zu erzeugen.

9. Anwendung nach Anspruch 8, welche wenigstens in einer Sicherheits-Betriebsart, die von an Bord befindlichen Einrichtungen festgelegt wird, ohne eine Übertragung von Daten, Informationen und Befehlen von Kommunikationsinfrastruktureinrichtungen am Boden aus zu den an Bord befindlichen Einrichtungen erfolgt.

10. Anwendung nach einem der Ansprüche 8 oder 9, wobei Daten, die verwendet werden, um die Informationen in Form von Befehlen zu erzeugen, auf identische und zu den gespeicherten und an Bord vorhandenen Daten komplementäre Weise von an Bord vorhandenen Sensoreinrichtungen geliefert werden, wie einem optischen Sensor, einer Kamera, einem Abstandsmesssensor, einem RFID-Leser und jedem beliebigen anderen Detektor.

## Claims

1. Method for communicating at least one piece of information between a first control unit (CU1) on-board a first vehicle (V1) and a public transport network,
wherein:
- the information is sent by the first control unit (CU1) in the form of a command (T2W, T2Q, T2T), said command being transferred to a first communication unit (I/O_1) on board the first vehicle,
- the first communication unit (I/O_1) establishes a transmission link outside the vehicle with a second communication unit (I/O_2, I/O_3) linked to a module (EXE2, EXE3) for executing said command, the second communication unit and the execution module being located either on the ground or on board a second vehicle (V2) comprising a second control unit (CU3),
- in the event of a transmission to the second communication unit (I/O_2) on the ground, the execution module on the ground (EXE2) is controlled in a governed slave mode for said command by a master mode of the first control unit (CU1), **characterised in that**
- in the event of a transmission to the second on-board communication unit (I/O_3), the execution module (EXE3) on board the second vehicle is controlled in a governed slave mode to permit said command to be executed in a master mode of the first control unit (CU1), thereby at least temporarily placing a second control unit (CU2) on board the second vehicle in a slave mode to execute said command.

2. Method according to claim 1, in which the slave mode of the second control unit (CU2) is eventually switched to master mode to execute said command independently.

3. Method according to claim 1, in which alternatively an execution module (EXE1) on board the first vehicle is controlled in a switched-back slave mode governed for said command by a master mode of the second control unit (CU3), thereby at least temporarily placing the first control unit (CU1) on board the first vehicle in a slave mode to execute said command.

4. Method according to one of claims 1 to 3, in which in the event of a transmission to the second communication unit (I/O_2) on the ground, the command governs at least one of the following actions:
- opening the platform doors, ideally in synchronisation with the vehicle doors;
- a switch interlock;
- a switch movement;
- a ground signal;
- storage of instantaneous information transmitted by the first vehicle in a communication terminal on the ground, said information being ideally readable by all vehicles approaching it;
- a diagnostic transmission to request a service on the ground, such as a power supply, a maintenance stage or an emergency;
- sending an alert signal;
- a functional status message for the on-board and/or ground equipment;

5. Method according to one of claims 1 to 4, in which in the event of a transmission to the second on-board communication unit (I/O_3), the command governs at least one of the following actions:
- a CBTC, ATC, IXL, ATP, ATO information exchange, in particular suited to self-guided vehicles;
- an information exchange enabling a driver to drive the second vehicle manually,
- an independent movement authority of the first and second vehicle;
- a preventive collision-prevention instruction;
- a vehicle approach or coupling instruction;
- a splitting instruction for a vehicle comprising a plurality of rolling-stock units;
- an inter-vehicle information transmission for each vehicle using various parameters such as position, speed, energy levels, braking capacity, instantaneous and anticipated routes;
- a forced protective switching from master mode to slave mode of one of the control units found to contravene safety standards, the other on-board control unit being set to a master mode to remote control the equipment on board the vehicle including the control unit in slave mode;
- a forced protective switching from master mode to slave mode of one of the control units found to contravene safety standards, and the remote control of the equipment on board the vehicle including the control unit in slave mode from a ground network pilot;

6. Method according to one of the preceding claims, in which at least one of the vehicles authorises a switching of a control unit on the ground to master mode in order to send parameters related to the network, resources, planning and public transport equipment to an on-board control unit.

7. Method according to one of the preceding claims, in which radio links are used for information communication between equipment on a first vehicle and ground or on-board equipment away from the first vehicle.

8. Use of the method according to one of the preceding claims when installing, updating or commissioning a physical public transport network and a related communications network, in particular by maximising, in a first phase, an initial supply of data that can be stored in the on-board control modules by the vehicles in order, in a second phase, to minimise the quantity of data transmission means, information and commands from communication infrastructure on the ground to said vehicles, said data thus stored and carried on board being used to generate the information in the form of commands.

9. Use according to claim 8 at least under security conditions confirmed from the on-board equipment, without transmitting data, information or commands from the communication infrastructure on the ground to said on-board equipment.

10. Use according to one of claims 8 to 9, in which the data used to generate the information in the form of commands, identical and additional to the data stored and carried on board, is provided by the on-board sensory equipment, such as an optical sensor, a camera, a distance measurement sensor, an RFID reader and any other sensor.
